# EUROPEAN PATENT APPLICATION

(11) **EP 2 245 946 A2**
(43) Date of publication of application: **03.11.2010**
(21) Application number: 10075161.9
(22) Date of filing: 21.04.2010
(51) Int. Cl.: A23L 1/164, A23L 1/00, A23L 1/36

(54) **A process for preparing a snack product consisting of a nut or such like, provided with a coating**

(30) Priority: 29.04.2009 NL 1036917
(71) Applicant: Weenink, Gijs, 6942 ME Didam (NL)
(72) Inventor: Weenink, Gijs, 6942 ME Didam (NL)
(74) Representative: Lips, Hendrik Jan George

(57) **Abstract**

A process for preparing a snack product consisting of a nut or such like, provided with a coating being formed by a dough material which expands by heating. Said coating consists of:
potato starch 50 - 55 %
wheat starch 20 - 30 %
vegetation type 5 - 20 %
rice flower 2 - 5 %
salt 2 - 5 %
colourings 1 - 2 %
rise material 0,5 - 1 %
stabilisator 0,5 - 1 %
in which, when spoken of "vegetation" it is meant a group of plants of the same kind, which are grown in the agriculture either horticulture, such as maize, wheat, potato, barley, soya, pea, oats, hop, colza, sesame seed, sunflower, linseed and such like. After applying on a nut or such like said coating is heated up to a temperature between 125 and 200 °C.

In particular the coating is heated to a temperature between 150 and 175 °C. As core of said snack product use can be made of peanuts, other types of nuts, fruit, peanuts-agglomerate either pieces of other foodstuffs.

## Description

### A processs for preparing a snack product consisting of a nut or such like, provided with a coating.

The invention relates to a process for preparing a snack product consisting of a nut or such like, provided with a coating being formed by a dough material which expands by heating.

Such a process is known from EP 0 608 950. In case of this known process the nut is coated with a first layer of expandable dough material and after this is coated with a second layer of a non- or hardly expandable dough material.

This combination is heated during which said first layer expands and the second, relatively hard, outer layer partly breaks open such that said first layer partly will expand through said second layer. The result is a nut with a rather hard outer layer.

Obviously said known process is cumbrous by the use of two layers of coating material. Further by this proces in particular a snack product is prepared with a relatively hard outer layer. So only a limited number of persons will appreciate such a snack product.

Now the object of the invention is to provide a process which is simplier in execution than said known process and which provides a snack product with a particular new appearance as the coating of it is totally expanded and very light.

According to the invention this is obtained by using a coating consisting of:

| | |
|---|---|
| potato starch | 50 - 55 % |
| wheat starch | 20 - 30 % |
| vegetation type | 5 - 20 % |
| rice flower | 2 - 5 % |
| salt | 2 - 5 % |
| colourings | 1 - 2 % |
| rise material | 0,5 - 1 % |
| stabilisator | 0,5 - 1 % |

after applying said coating on a nut or such like said coating is heated up to a temperature between 125 and 200°C.

When there is spoken of "vegetation type" it is meant a group of plants of the same kind, which are grown in the agriculture either horticulture, such as maize, wheat, potato, barley, soya, pea, oats, hop, colza, sesame seed, sunflower, linseed and such like.

When using such a coating a "light nut" is obtained with a special texture. Said snack product is having a new taste and a pleasant "bite" as well.

Applying the process according to the invention as core of said snack product use can be made e. g. of peanuts, other type of nuts, fruit, peanuts-agglomerate either pieces of other foodstuffs.

The method of heating will depend on the desired temperature, but generally will take place in an oven either in frying oil. Suitable temperatures for the expanding of said dough material, generally speaking will be the current temperatures which are lying between 125 and 200 °C. A temperature between 150 and 175 °C is preferred.

The kind of composition of the coating, so of said dough material, will be adapted to the desired vegetation component and the degree of expansion.

The selection of the amount of said types of starch will depend on the used vegetation type and of the desired surface structure of the finished product. Generally speaking it will be aimed at a snack product the coating of which is 30 to 70 percent of weight of the finished product.

The invention is further illustrated by an example of an embodiment.

1 kg peanut is brought into a coating drum in which 1 kg of a coating composition is mixed while simultaneously a spraying liquid is added. In particular water will be used as spraying liquid. After some time of mixing, in particular during 2 up to 5 minutes, the obtained semi-manufactured article is fried in frying oil during 8 minutes at 165 °C. The finished product is a nut product which is extremely light and expanded. If desired the obtained product can be sprinkled with a seasoning. As seasoning is understand a mixture of flavourings, dry seasons/spices, auxiliary and/or colouring materials, said mix taking care for the typical nature of taste of the finished product.

Obviouly this is only one possible embodiment of a process according to the invention as described above and that many modifications can be applied without leaving the inventive concept as this is indicated in the claims.

## Claims

1. A process for preparing a snack product consisting of a nut or such like, provided with a coating being formed by a dough material which expands by heating, **characterized in that** use is made of a coating consisting of:
| | |
|---|---|
| potato starch | 50 - 55 % |
| wheat starch | 20 - 30 % |
| vegetation type | 5 - 20 % |
| rice flower | 2 - 5 % |
| salt | 2 - 5 % |
| colourings | 1 - 2 % |
| rise material | 0,5 - 1 % |
| stabilisator | 0,5 - 1 % |
in which, when spoken of "vegetation" it is meant a group of plants of the same kind, which are grown in the agriculture either horticulture, such as maize, wheat, potato, barley, soya, pea, oats, hop, colza, sesame seed, sunflower, linseed and such like, which coating after applying on a nut or such like is heated up to a temperature between 125 and 200 °C.

2. A process according to claim 1, **characterized in that** after applying the coating is heated to a temperature between 150 and 175 °C.

3. A process according to claim 1 or 2, **characterized in that** as core of said snack product use can be made e. g. of peanuts, other types of nuts, fruit, peanuts-agglomerate either pieces of other foodstuffs.

4. Snack product consisting of a nut or such like, provided with a coating, obtained by means of the process according to one of the preceding claims.
